# EUROPEAN PATENT SPECIFICATION

(11) **EP 4 121 707 B1**
(45) Date of publication and mention of the grant of the patent: **13.03.2024**
(21) Application number: 21713927.8
(22) Date of filing: 18.03.2021
(51) Int. Cl.: F26B 21/08, F26B 23/00, F26B 3/04, F26B 9/06

(54) **METHOD AND SYSTEM FOR SUPPLYING DRYING AIR**
VERFAHREN UND SYSTEM ZUR ZUFÜHRUNG VON TROCKNUNGSLUFT
MÉTHODE ET SYSTÈME D'ALIMENTATION EN AIR DE SÉCHAGE

(30) Priority: 20.03.2020 SE 2050305
(43) Date of publication of application: 25.01.2023
(73) Proprietor: SAMSTER AB, 421 37 Kungsbacka (SE)
(72) Inventor: SAMUELSSON, Kent, 437 35 Lindome (SE); STEIER, Vilhelm, 439 53 Åsa (SE)
(74) Representative: Kransell & Wennborg KB
(86) International application number: PCT/EP2021/056988
(87) International publication number: WO 2021/185984

(56) References cited:
- CN-A- 106 643 026
- CN-A- 107 940 923
- CN-A- 109 341 317
- JP-A- H1 082 585
- JP-A- H11 264 663
- US-A1- 2019 390 907

## Description

### TECHNICAL FIELD

The present disclosure relates to the field of drying material. In particular the disclosure concerns a method and a system for drying material in a drying chamber.

### BACKGROUND

Dryers are often used for drying products such as grain, crops, fruits, rice or other food products. Such dryers are often arranged to dry the air in relatively large chambers where the product is placed. It is often the case that the dryers are inefficient and are powered by oil or pellets which leads to an inefficient and environmentally un-friendly drying process.

Other dryers may be operated by a refrigerator system to dehumidify the air in the chamber. In such systems a heat pump is arranged to cool, dehumidify and subsequently heat the air before it is released in the chamber. This may appear as a promising alternative to the oil or pellets powered dryers.

US4,532,720 discloses a drying process and a drying system for use in drying grain. The drying system comprises a housing wherein air is passed from a drying chamber sequentially through an inlet of the housing, a first side of a heat exchanger, an evaporator, a second side of the heat exchanger, a heater such as a condenser and an outlet back to the drying chamber. JP H11 264663 A and CN106 643 026 A disclose further drying process and systems.

However, there is still room for improvement with regards to the efficiency of driers. With the emerge of renewable power sources, it may for example be possible to power driers, if sufficiently efficient, with smaller scale renewable power sources.

### SUMMARY

An object of the present disclosure is to provide an enhanced method of drying material in a drying chamber.

Another object is to provide such a method which is energy efficient.

A further object is to provide such a method which is gentle to the material to be dried.

Yet another object is to provide such a method by which the material may be fully dried in a comparatively short time.

Still a further object is to provide such a method which is environmentally friendly.

Another object is to provide an air-drying system for carrying out the method.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.
According to a first aspect, the present disclosure provides a method of drying a material in a drying chamber. The method comprises the steps of;
- supplying air to an air-drying system which air-drying system comprises;
   · an air inlet,
   · a first heat exchanger having a first warm side and a first cold side,
   · a heat pump comprising an evaporator, a condenser and a compressor arranged to provide a first heat transfer from the evaporator to the condenser,
   · an air outlet arranged to supply the air to the drying chamber,
   · a second heat exchanger having a second warm side and a second cold side, the second cold side being connected a heat transfer medium capable of absorbing heat from the second warm side through a second heat transfer, the second heat exchanger being arranged downstream of the first cold side and upstream of the air outlet, and
   · an air flow device arranged to control the air flow rate from the air inlet to the air outlet for supplying air into a drying chamber
- passing the air, by means of the air flow device, from the air inlet, sequentially through the first warm side of the first heat exchanger, the evaporator, the first cold side of the first heat exchanger, the condenser and the air outlet and further passing the air through the second warm side of the second heat exchanger, and
- alternately heating and cooling the air passing the air-drying system, wherein
   · heating the air comprises promoting the first heat transfer while supressing the second heat transfer, and
   · cooling the air comprises supressing the first heat transfer while promoting the second air transfer.

The first heat exchanger and the heat pump comprising the evaporator and the condenser connected by the compressor affords for that heat energy absorbed from the air at the dehumidification stages may efficiently be reused for subsequent heating of the air before the air is supplied into the drying chamber. The air-drying system comprising the first heat exchanger and the heat pump thus allows an energy efficient drying of the material in the drying chamber.

The method further provides for that the air to be supplied into the drying chamber is alternately heated and cooled in cycles. This affords for a number of advantages. The alternately heated and cooled air supplied into the drying chamber reduces the temperature gradient in the load of material to be dried. At traditional methods, where the air is continuously heated during drying, the material positioned closer to the air supply entrance of the drying chamber is heated to considerably higher temperatures than the material being positioned further away from the air entrance. By altering the temperature of the air supplied to the material, the temperature gradient in the load may be considerably reduced. By this means, the maximum temperature in the load may be reduced while still achieving fast and efficient moisture absorption to thereby avoid adverse overheating of the material.

Additionally, the momentary maximum temperature of the drying air may be increased without risking damage of the material. Such an increase of the momentary maximum air temperature reduces the required length of the drying period. The reduced temperature gradient in the load also reduces the need of repeatedly reversing the air flow direction over the load.

The alternate heating and cooling of the drying air also results in that the moisture gradient in the load will be kept to a minimum during the entire drying sequence. This in turn affords for that the entire load reaches the targeted moisture content within a reduced time span, whereby excessive drying of some portions of the load may be avoided. In addition, the reduced moisture gradient in the load considerably facilitates measuring and achieving reliable moisture values of the load throughout the drying sequence.

According to embodiments, the first heat transfer may be promoted by increasing the operational speed of the compressor and supressed by decreasing the operational speed of the compressor.

The heat transfer medium may be arranged to flow through the second cold side of the second heat exchanger and the second heat transfer may be promoted by increasing and supressed by decreasing the flow of heat transfer medium through said second cold side of the second heat exchanger.

The method may further comprise condensing water from the air passing the evaporator and collecting the condensate water in a reservoir.

The second heat transfer may comprise transferring heat from the air passing the second cold side of the second heat exchanger to the condensed water in the reservoir.

Then, the second heat transfer may comprise transferring heat from the air passing the second cold side of the second heat exchanger to the condensed water in the reservoir by means of the heat transfer medium and a first reservoir heat exchanger arranged in the reservoir.

Alternatively or in combination, the second heat transfer may comprise using the condensate water as the heat transfer media by passing the condensate water from the reservoir through the second cold side of the second heat exchanger.

The heat pump may be arranged to provide a third heat transfer from the evaporator to the condensate water in the reservoir and cooling the air may then comprise promoting the third heat transfer.

The method may further comprise regulating the operation of the compressor in response to the presently available operation power and regulating the air flow device for controlling the air flow rate in response to the temperature of the air downstream of the evaporator and upstream of the first cold side of the first heat exchanger.

The method may further comprise supplying operational power to the compressor and the air flow device from a varying power generating source, such as a photovoltaic solar collector or a hybrid photovoltaic and thermal solar collector ("PVT").

The heating and cooling of the air in the air-drying system may be alternated with a frequency of 5 to 100 cycles per 24 hours, preferably 15 to 30 cycles per 24 hours.

According to a second aspect, the disclosure provides an air-drying system arranged to carry out the method. The air-drying system comprises;
· an air inlet,
· a first heat exchanger having a first warm side and a first cold side,
· a heat pump comprising an evaporator, a condenser and a compressor arranged to provide a first heat transfer from the evaporator to the condenser,
· an air outlet arranged to supply the air to the drying chamber,
· a duct arranged to conduct air from the air inlet sequentially through the first warm side, the evaporator, the first cold side and the condenser to the air outlet,
· a second heat exchanger having a second warm side and a second cold side, the second cold side being connected a heat transfer medium capable of absorbing heat from the second warm side through a second heat transfer, the second heat exchanger being arranged downstream of the first cold side and upstream of the air outlet,
· an air flow device arranged to control the air flow rate from the air inlet to the air outlet and
· means for alternately promoting the first heat transfer while supressing the second heat transfer and supressing the first heat transfer while promoting the second air transfer.

The air-drying system may further comprise a reservoir arranged to collect water which has condensed from the air passing the evaporator.

The air-drying may further comprise a first reservoir heat exchanger arranged to transfer heat from the heat transfer medium to condensed water in the reservoir.

Alternatively or in combination, the air-drying system may further comprise conduits for conducting condensed water from the reservoir to the second cold side of the second heat exchanger and back.

The heat pump may comprise means for alternatively providing a first heat transfer from the evaporator to the condenser and a third heat transfer from the evaporator to the condensed water in the reservoir.

The air-drying system may further comprise means for regulating the operation of the compressor in response to the presently available operation power and means for regulating the air flow device for controlling the air flow rate in response to the temperature of the air downstream of the evaporator and upstream of the first cold side of the first heat exchanger.

The air-drying system may comprise a varying power generating source, such as a photovoltaic solar collector or a hybrid photovoltaic and thermal solar collector ("PVT") arranged to provide operational power to the compressor and the air flow device.

The method and the system may be used for drying different types of products or materials such as, but not limited to, different types of grain, fruit and other crops, wood, hay and the like.

Further objects and advantages of the method and the air-drying system will be apparent from the following detailed description of exemplifying embodiments and from the appended claims

### BRIEF DESCRIPTION OF THE DRAWINGS

Aspects and embodiments are now described, by way of example, with reference to the accompanying drawings, in which:
Fig 1 is a schematic sketch illustrating a drying chamber with an air-drying system and a load of material to be dried.
Fig. 2 is a schematic sketch illustrating an air-drying system according to an embodiment.
Fig. 3 is a schematic sketch illustrating an air-drying system according to another embodiment.
Fig. 4 is a schematic sketch illustrating an air-drying system according to a further embodiment, with some parts removed.
Fig. 5 is a schematic sketch illustrating an air-drying system according to still a further embodiment, with some parts removed.
Fig. 6 is a schematic sketch illustrating an air-drying system according to a yet another embodiment, with some parts removed.
Fig. 7 is a schematic sketch illustrating an air-drying system according to a further embodiment, with some parts removed.
Fig. 8 is a diagram illustrating temperature variations during an initial portion of a drying sequence at a method according to an exemplifying embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

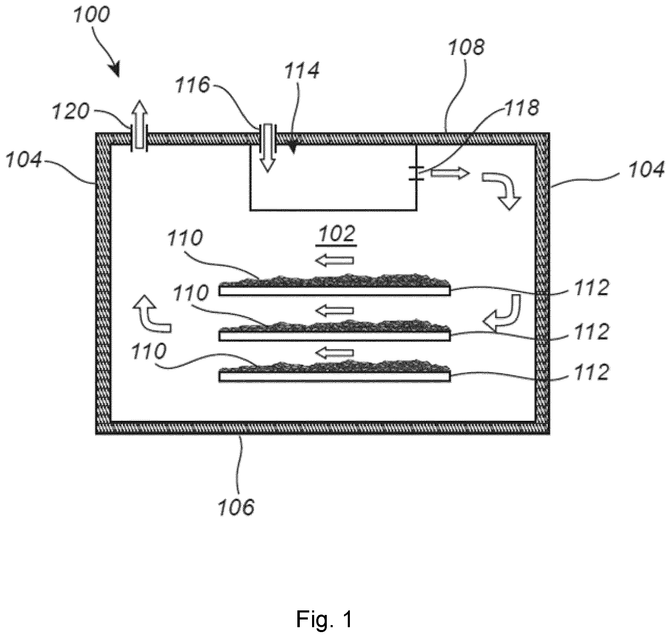

Fig. 1 conceptually illustrates a drying chamber 100 enclosing a space 102. The drying chamber includes walls 104, a floor 106 and a ceiling 108. The drying chamber 100 is adapted for drying a product 110, here shown to be arranged on shelves 112, although shelves are not necessarily required. The arrangement of the product depends on the specific implementation and which product that is being dried.

An air-drying system 114 is arranged to dehumidify the air in the space 102, i.e. inside the drying chamber 100. The air-drying system 114 has an air inlet 116 for receiving fresh air from outside of the space 102 and an air outlet 118 for providing dehumidified air into the space 102. The dehumidified air is circulated in the space 102 past the product load 110. After having passed the load, the air is vented out to the outside of the space 102, through a chamber outlet 120.

In fig. 1 the drying system 114 is shown to be arranged at the ceiling of the drying chamber 100. However, this is shown as an example. The drying system 114 may be placed elsewhere in the drying chamber. Furthermore, the drying system 114 may be arranged outside the drying chamber 100 as long as the outlet 118 reaches inside the drying chamber by suitable means, e.g. tubing or pipes.

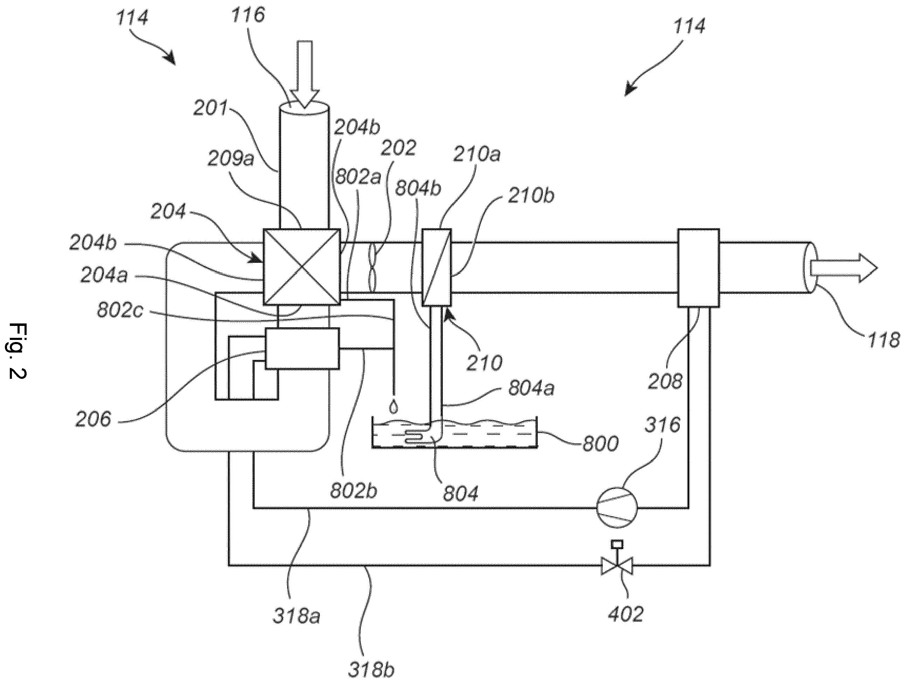

Fig. 2 conceptually illustrates an air-drying system 114 according to a first embodiment. The air-drying system 114 comprises a duct 201 extending from the air inlet 116 to the air outlet 118 and arranged for conducting air from the air inlet 116 to the air outlet 118. Arranged sequentially one after the other from the air inlet to the air outlet, the air drying system 114 further comprises a first warm side 204a of a first heat exchanger 204, an evaporator 206, a cold side 204b of the first heat exchanger 204, an air flow device 202, a second warm side 210a of a second heat exchanger 210 and an condenser 208. The first heat exchanger 204 is an air-to-air cross heat exchanger and the second heat exchanger 210 is an air-to-water heat exchanger. The evaporator 206 and the condenser 208 form part of a heat pump which further comprises a compressor 316, an expansion valve 402 and refrigerant conduits 318a, 318b for conducting a heat pump refrigerant between the evaporator 206 and the condenser 208, via the compressor 316 and the expansion valve 402.

The air-drying system further comprises a reservoir 800 for collecting and storing condensed water extracted from the air passing through the air-drying system. A first condensed water conduit 802a is arranged between the first heat exchanger 204 and the reservoir 800 and a second condensed water conduit 802b is arranged between the evaporator 206 and the reservoir 800. Both conduits 802a, 802b are connected to a third condensed water conduit 802c for delivering the condensed water to the reservoir 800.

A second cold side 210b of the second heat exchanger 210 is connected to a first reservoir heat exchanger 804 arranged in the reservoir 800 by means of heat transfer medium conduits 804a, 804b. Circulation means (not shown) such as a pump are arranged to circulate a heat transfer media in the conduits 804a, 804b from the first reservoir heat exchanger 804 to the second cold side 210b and back to the first reservoir heat exchanger 804.

When using the air-drying system for drying the product 110 in the drying chamber 100, the air-drying system is operated to alternately heat and actively cool the air passing through the air-drying system. By the term "actively cool" is here meant to reduce the temperature of the air by extracting heat from the air.

In an initial heating stage of a heating and cooling cycle, the first heat transfer from the evaporator 206 to the condenser 208 is promoted by operating the compressor 316 for transferring heat extracted from the air in the evaporator 206 to the condenser 208. On the other hand, the second heat transfer from the second heat exchanger 210 is supressed by keeping the circulation means (not shown) for circulating the heat transfer medium between the first reservoir heat exchanger 804 and the second cold side 210b of the second heat exchanger 210 turned off, such that the heat transfer medium does not flow through the second heat exchanger 210.

During the heating stage, air is supplied from the outside of the drying chamber 100, via the inlet 116 to the duct 201. The air first passes the first warm side 204a of the first heat exchanger 204, whereby the air is pre-cooled by heat transfer from the first warm side 204a to the first cold side 204b of the first heat exchanger 204. During this pre-cooling the air temperature is normally reduced to the dewpoint whereby a fraction of the air moisture is condensed and extracted from the air. The condensed water is conducted through conduit 802a and 802c to the reservoir 800, where the water is collected. After passage of the first warm side 204a the air is conducted to the evaporator 206 where the air temperature is further reduced to approximately 0-3°C. At this further cooling, additional water is extracted from the air which water, having a temperature of approx. 1-3 °C is conducted to the reservoir 800 via conduits 802b, 802c.

From the evaporator 206, the air is further conducted to the first cold side 204a of the first heat exchanger 204. When passing the first cold side 204b, heat extracted by the first warm side 204a is absorbed by the air such that the air is preheated to approx. 14°C. Thereafter, the air continues to pass the air flow device 202 where the temperature may be slightly further increased by friction heating and losses in the air flow device. From the air flow device 202, the air continues through the second warm side 210a of second heat exchanger 2. Since the flow of heat transfer medium through the second heat exchanger 210, during this warming phase is blocked, no substantial change of the air temperature is caused during the passage of the second heat exchanger 210. From the second heat exchanger 210, the air is conducted through the condenser 208 of the heat pump. Here, the temperature of the air is substantially increased by absorption of heat which has been transferred by means of the refrigerant from the evaporator 206, via the compressor 316 to the condenser 208. The air is then conducted through the air outlet 118 into the drying chamber 100 and passed the product 110, where the so dried and heated air absorbs moisture from the product.

Typically, when supplying ambient air having a temperature of approx. 20 ° C and a relative humidity of approx. 75% RH to the air inlet 116, the passage of the air-drying system will, during the heating phase, increase the air temperature to approx. 50-55 °C and decrease the relative humidity to approx. 5% RH.

At the embodiment illustrated in fig. 2, the compressor 316 is turned off during the subsequent active cooling phase of the altering heating and cooling cycle. Instead, the circulation means (not shown) for circulating the heat transfer medium through the first reservoir heat exchanger 804 and the second heat exchanger 210 is activated. Thus, during the cooling phase, the heat transfer medium is circulated from the first reservoir heat exchanger 804 to the second cold side 210b of the second heat exchanger 210 and back to the first reservoir heat exchanger 804.

Ambient air now supplied through the inlet 116 passes the first warm side 204a of the first heat exchanger 204. Since the compressor 316 is turned off, the temperature of the air will not be changed while passing the evaporator 206. Thus, the air temperature of the air passing the first cold side 204b of the first heat exchanger 204 will be essentially the same as the temperature of the inlet air passing the first warm side 204a such that no substantial heat transfer will occur at the first heat exchanger 204. Hence, during the cooling phase, the temperature or the relative humidity of the air will not be influenced to any appreciable degree during passage of the first warm side 204a, the evaporator 206 and the first cold side 204b of the first heat exchanger 204. Subsequent passage of the air flow device 202 may marginally increase the temperature of the air. However, during passage of the second warm side 210b of the second heat exchanger 210, the temperature of the air will be substantially decreased. Since the temperature of the condensed water in the reservoir initially is approx. 1-3 °C passage of the second warm side 210 will initially reduce the air temperature to approx. the same temperature range. After having passed the second warm side 210a, the air is conducted through the condenser 208, which does not substantially influence the air temperature since the compressor 316 is turned off. Thereafter, the air is passed thorough the air outlet 118, into the drying chamber 100. During passage of the product 110 in the drying chamber 100, the so cooled air absorbs heat from the product load to thereby reduce the temperature of the load.

At air passage of the second warm side 210b of the second heat exchanger 210, during the cooling phase, the heat transfer medium will absorb heat from the passing air and this heat will be transferred into the water in the reservoir 800. Continued cooling of the air thus results in that the temperature of the water in the reservoir 800 gradually will increase. The cooling phase of each heating and cooling cycle is typically continued until the temperature of the water in the reservoir 800 reaches approx. 15 °C. At this stage, the second warm side 210b is also capable of cooling the passing air to approx. 15 °C. At higher temperatures of the air supplied to the load in the drying chamber, the advantages of intermittent cooling of the load is decreased since supplying air above this temperature does not significantly decrease the temperature gradient in the load. Hence, when the temperature of water in the reservoir 800 reaches approx. 15 °C, the cooling phase is interrupted and the next cycle is initiated and heating is recommenced, by stopping the heat transfer medium flow through the second warm side 210b and again activating the compressor 316.

During the above described heating and cooling phases, the air flow device 202 is arranged and controlled to provide a suitable air flow rate from the air inlet 116 to the air outlet 118. The air flow device 202 may typically but not necessary comprise a fan or a blower. As shown in fig. 2, the air flow device is preferably positioned downstream of the first warm side 204b of the first heat exchanger 204 and upstream of the second heat exchanger 210. By this means the flow device 202 does not negatively influence the efficiency of the first heat exchanger 204. Additionally, by such a positioning the air flow device 202 is efficiently cooled and contributes, during the heating phase, to heat the air flow downstream of the flow device 202. However, at other not shown embodiments the air flow device may be placed at the air inlet, or at the air outlet of the drying system, or in another location as long as it can control the air flow rate from the air inlet 116 to the air outlet 118.

During the above described heating and cooling phases of the drying cycle, ambient air from outside of the drying chamber is provided to the air inlet 116 of the drying system. Additionally, the air which has passed over the product 110 load is conducted out to the surroundings of the drying chamber via chamber outlet 120. By this means comparatively dry fresh air from the surroundings is continuously feed into the air-drying system. This affords for that, during the heating phase, a comparatively small amount of moisture needs to be extracted from the air for reaching the desired relative humidity of the air which is to be provided into the drying chamber.

At an alternative, not shown embodiment, the air inlet of the air-drying system may be arranged to receive air from the interior space 102 of the drying chamber 100. By this means a certain volume of air may be continuously circulated from the interior space 102, downstream of the load, into the air-drying system, from the air-drying system to the upstream end of the interior space 102, and over the load back to the downstream end of the interior space. Such a recirculation of the drying air requires that the air-drying system is powered such that the first warm side of the first heat exchanger and the evaporator is capable of extracting the additional amount of moisture absorbed by the circulating air when passing over the load.

At another not shown embodiment, the air-drying system may be provided with a first closable inlet for providing ambient air from the surroundings and a second closable inlet for providing air drawn from the interior space. Correspondingly, the drying chamber may be provided by a closable chamber outlet for, when opened, expelling air from the downstream end of the drying chamber to the surroundings. By this means, the air may be provided to the air-drying system selectively from the outside of the drying chamber or from the interior space and the air having passed over the load may selectively be returned to the air-drying system or expelled to the surroundings of the drying chamber.

At a further not shown embodiment the air-drying system may be provided with a first inlet having a damper for regulating the air inlet flow from the surroundings and a second inlet having a damper for regulating the air inlet from the downstream end of the drying chamber. Correspondingly, the air chamber may be provided with an air outlet having a damper for regulating the air flow from the interior space to the surroundings. By this means it is possible to provide the air-drying system with a suitable mixture of fresh air from the surroundings and recirculated air from the downstream end of the drying chamber.

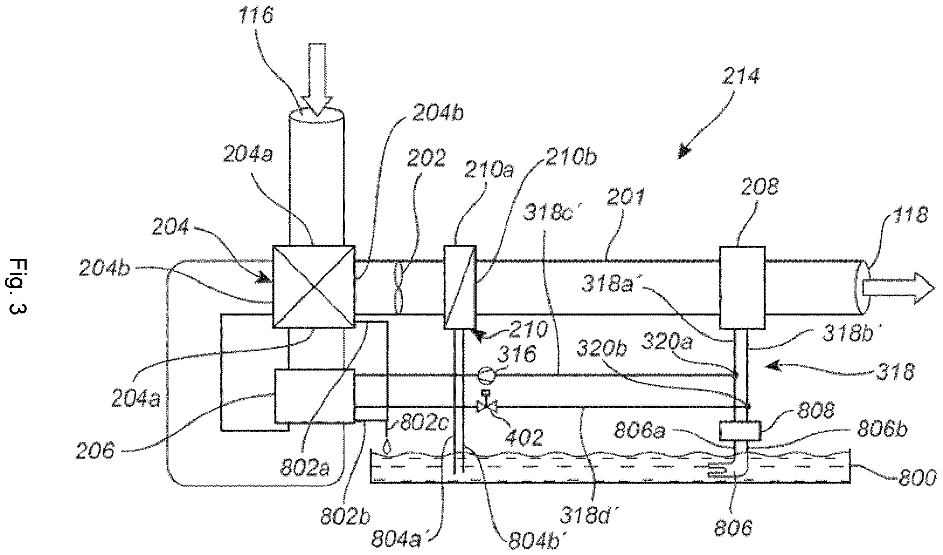

Fig. 3 illustrates a further embodiment of the air-drying system 214. As in at the embodiment shown in fig. 2, the air-drying system 214 comprises an air inlet 116, an air outlet 118, an air duct 201 and an air flow device 202 for passing air from the air inlet 116, through the air duct 201, to the air outlet 118. Arranged sequentially one after the other from the air inlet 116 to the air outlet 118 and mutually connected by means of the air duct 201, the air drying system 114 further comprises a first warm side 204a of a first heat exchanger 204, an evaporator 206, a first cold side 204b of the first heat exchanger 204, an air flow device 202, a second warm side 210a of a second heat exchanger 210 and an condenser 208. The first heat exchanger 204 is an air-to-air cross heat exchanger and the second heat exchanger 210 is an air-to-water heat exchanger.

The air-drying system further comprises a reservoir 800 for collecting and storing condensed water extracted from the air by means of the first warm side 204a and the evaporator 206. For this purpose, condensed water conduits 802a-c are arranged to conduct condensed water from the first warm side 204a of the first heat exchanger 204 and the evaporator 206 to the reservoir. The second cold side 210b of the second heat exchanger 210 is connected to the reservoir 800 by means of conduits 804a, 804b which are arranged to circulate condensed water from the reservoir 800 to the second cold side 210b and back to the reservoir 800. For this purpose, a not shown condensed water circulations means, such as a pump is provided.

A second reservoir heat exchanger 806 is arranged in the reservoir 800. The second reservoir heat exchanger 806 is a liquid to liquid heat exchanger which is connected to an auxiliary heat exchanger 808 via conduits 806a, 806b. The auxiliary heat exchanger 808 is a liquid to refrigerant heat exchanger.

The evaporator 206 and the condenser 208 form part of a heat pump which further comprises a compressor 316, an expansion valve 402 and refrigerant conduits 318a', 318b', 318c', 318d'. Two three-way valves 320a, 320b are arranged for selectively connecting the evaporator 206 with the condenser 208 or with the auxiliary heat exchanger 808. By selecting a corresponding state of the three-way valves 320a, 320b, the evaporator may thus either be connected to the condenser 208, via the compressor 316 and the expansion valve 402 or to the condensed water in the reservoir 800, via the compressor 316, the expansion valve 402, the auxiliary heat exchanger 808 and the second reservoir heat exchanger 806.

As at the embodiment described above with reference to fig. 2, the drying sequence comprises consecutive cycles of altering air-heating phases and air-cooling phases. The heating phase of each cycle is carried out essentially as the heating phase described above. During the heating phase, the three-way valves are set to connect the evaporator 206 to the condenser 208 via the compressor 316, and the expansion valve 402. The compressor 316 is operated to transfer heat from the evaporator 206 to the condenser 208. The condensed water circulating means (not shown) is not activated such that the condensed water does not flow through the second cold side 210b of the second heat exchanger.

During the heating stage, air is supplied from the outside of the drying chamber 100, via the inlet 115 to the duct 201. The air first passes the first warm side 204a of the first heat exchanger 204, whereby the air is pre-cooled by heat transfer from the first warm side 204a to the first cold side 204b of the first heat exchanger 204. During this pre-cooling, the air temperature is normally reduced to the dewpoint whereby a fraction of the air moisture is condensed and extracted from the air. The condensed water is conducted through conduit 802a and 802c to the reservoir 800, where the water is collected. After passage of the first warm side 204a the air is conducted to the evaporator 206 where the air temperature is further reduced to approximately 0-3°C. At this further cooling, additional water is extracted from the air which water, having a temperature of approx. 1-3 °C is conducted to the reservoir 800 via conduits 802b, 802c.

From the evaporator 206, the air is further conducted to the first cold side 204a of the first heat exchanger 204. When passing the first cold side 204b, heat extracted by the first warm side 204a is absorbed by the air such that the air is preheated to approx. 14°C. Thereafter, the air continues to pass the air flow device 202 where the temperature may be slightly further increased by friction heating. From the air flow device 202, the air continues through the second warm side 210a of second heat exchanger 2. Since the flow of heat transfer medium through the second heat exchanger 210, during this warming phase is blocked, no substantial change of the air temperature is caused during the passage of the second heat exchanger 210. From the second heat exchanger 210, the air is conducted through the condenser 208 of the heat pump. Here, the temperature of the air is substantially increased by absorption of heat which has been transferred by means of the refrigerant from the evaporator 206, via the compressor 316 to the condenser 208. The air is then conducted through the air outlet 118 into the drying chamber 100 and passed the product 110, where the so dried and heated air absorbs moisture from the product.

At the embodiment shown in fig. 3, the cooling phase differs from what is disclosed above with reference to fig. 2. Here, the cooling phase of each cycle is divided into an initial cooling phase period and a subsequent cooling phase period. The initial cooling phase period is accomplished essentially as the cooling phase described above with reference to fig. 2. During the initial cooling phase period the compressor is turned off and the condensed water circulation means (not shown) are activated such that condensed water is circulated from the reservoir 800 through the second cold side 210b of the second heat exchanger 210 and back to the reservoir.

During the initial cooling phase period, ambient air supplied through the inlet 116 passes the first warm side 204a of the first heat exchanger 204, the evaporator 206 and the first cold side 204b of the first heat exchanger 204 without any substantial change of the air temperature. Subsequent passage of the air flow device 202 may marginally increase the temperature of the air. However, during passage of the second warm side 210b of the second heat exchanger 210, the temperature of the air will be substantially decreased. Since the temperature of the condensed water in the reservoir is approx. 1-3°C passage of the second warm side 210 will initially reduce the air temperature to approximately the same temperature range. After having passed the second warm side 210a, the air is conducted through the condenser 208, which does not substantially influence the air temperature since the compressor 316 is turned off. Thereafter, the air is passed through the air outlet 118, into the drying chamber 100. As described above, continuous passage of air through the second warm side 210a of the second heat exchanger will lead to a gradual increase of the condensed water temperature which in turn gradually decreases the ability to cool the air passing the second warm side 210a of the second heat exchanger.

Therefore, at the embodiment illustrated in fig.3, a subsequent cooling phase period is initiated when the temperature of the condensed water in the reservoir 800 has reached approx. 15 °C. During the subsequent cooling phase period, the compressor 316 is again activated and the three-way valves 320a, 320b are set to connect the evaporator 206, via the auxiliary heat exchanger 808 and the second reservoir heat exchanger 806 to the condensed water in the reservoir 800.

Air provided through the air inlet 116 is, just as during the heating phase pre-cooled when passing the first warm side 204a of the first heat exchanger 204. Subsequent passage through the evaporator 206 further decreases the temperature of the air. It should be noted however that, during the subsequent cooling phase period, heat absorbed by the heat pump refrigerant at the evaporator 206 is not transferred to the condenser (which remains inactive) but instead, via the auxiliary heat exchanger 808 and the second reservoir heat exchanger 806 to the condensed water in the reservoir 800. After having passed the evaporator 206, the temperature of the air is typically approx. 0-3 ° C. During the subsequent passage of the air through the first cold side 204b of the first heat exchanger 204 the air temperature is raised to approx. 15°C. Since there is no condensed water flow through the second heat exchanger 210 and since the refrigerant of the heat pump is not conducted to the condenser, subsequent passage of the air through the second heat exchanger 210 and the condenser will not influence the temperature of the air. Hence, during the subsequent cooling phase, air supplied to the interior space 102 of the drying chamber 100 has continuously a temperature of approx. 15°C such that cooling of the load in the drying chamber may be continued during the subsequent cooling phase period after the temperature of the condensed water in the reservoir has reached approx. 15 °C at the end of the initial cooling phase period.

Since the heat pump refrigerant, during the subsequent cooling phase, is connected to the auxiliary heat exchanger 808 via the compressor 316 and the expansion valve 402, the temperature of the condensed water in the reservoir 800 may be raised to well over 15 °C while still allowing the evaporator 206 to cool the passing air to approx. 0-3°C. Hence, cooling of the load by suppling air at approx. 15 °C may continue for a comparatively long period. Typically, the subsequent cooling phase is interrupted, and the heating phase recommenced when the temperature of the condensed water in the reservoir has reached approx. 40-50 ° C.

Thus, after terminating the subsequent cooling phase, the temperature of the condensed water in the reservoir is approx. 40-50 ° C. The heat energy stored in the condensed water may be used for a number of different purposes. For example, during the next heating phase after the subsequent cooling phase period, the heat of the so heated condensed water may be transferred back to the air-drying system for additional heating of the air passing through the air-drying system. This may be accomplished by arranging an additional heat exchanger (not shown) arranged e.g. between the condenser 208 and the air outlet 118, for transferring heat from the condensed water to the air in the air-drying system. Alternatively, the second heat exchanger 210 may, during the heating phase, be used in a reversed manner such that it then transfers heat from the condensed water to the air passing the second heat exchanger 210. At such instances that side of the second heat exchanger which is connected to the condensed water will act as the warm side and the side passed by the air flow through the drying system will act as the cold side of the second heat exchanger.

At applications where the condensed water heated during the a cooling phase, may it be according to any of the above described embodiments, is used for additional heating of the air in a following heating phase, measures may be taken to allow the collection and storage of the condensed water extracted by the first warm side 204a and the evaporator during said following heating phase. This may be accomplished e.g. by providing a second reservoir (not shown) and by alternately conducting the water extracted during a first and a following heating phase to the first and the second reservoir respectively. Alternatively, the water which has been heated during a cooling phase may be transferred from a first reservoir as shown in figs. 2 and 3 to a second reservoir (not shown) after completion of the cooling phase. By this means the first reservoir may receive water extracted during a following heating phase and the water in the second reservoir may be used for additional heating during said following heating phase.

Irrespective of if the heat stored in the condensed water during the cooling phase is used for additional heating in a following heating phase or not, any remaining heat in the condensed water may be used for other heating purposes such as for heating of buildings or for defrosting nearby roads or the like.

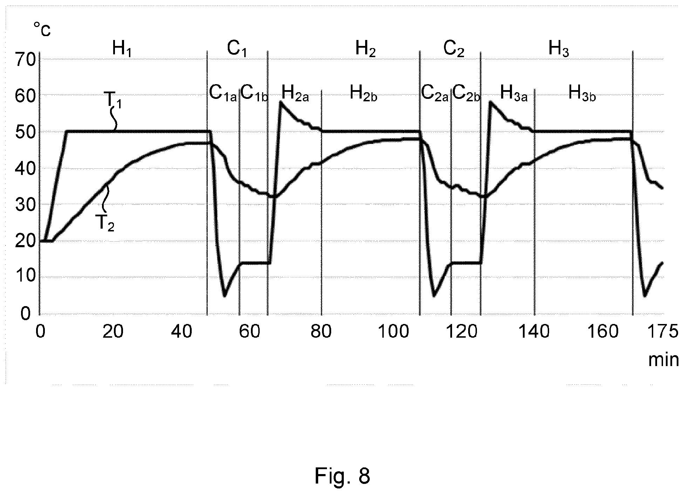

Fig. 8 is a diagram illustrating how the temperatures T1 at the air outlet 118 of the air-drying system and T2 at the load in the drying chamber 102 varies when the method described above with reference to fig. 3 is carried out. In the example, the method is carried out on a load of 20 m³ of barley positioned on shelves in a drying chamber. The initial moisture content of the load is approx. 20% and the desired resulting moisture content is 14%. Ambient air having the temperature of approx. 20°C and relative humidity of 75% RH is supplied to the air-drying system 214. After having passed the load in the drying chamber 102, the air is expelled to the surroundings.

The entire drying sequence for bringing the load to a moisture content of 14% comprises in total six drying cycles. The diagram illustrates how the temperatures T1 and T2 vary during the initial drying cycles when carrying out the method. The diagram illustrates a fist drying cycle comprising a first heating phase H1 and a first cooling phase C1 followed by a second drying cycle comprising a second heating phase H2 and a second cooling phase C2. The diagram also illustrates the heating phase H3 of a third drying cycle. Referring to figs. 3 and 8, when starting up the drying sequence, the temperature of the load is approx. 20 ° C and the reservoir 800 is empty.

During the first heating phase H1 of the first drying cycle, the heat pump is operated to transfer heat from the evaporator 206 to the condenser 208 and the condense water extracted by the first warm side 204a and the evaporator 206 is collected in the reservoir 800. This brings the temperature of the air supplied through the air outlet 118, T1 to 50 ° C, which temperature is maintained throughout the first heating phase H1.

After approx. 48 minutes, the first heating phase H1 is terminated by turning off the compressor 316. Simultaneously an initial cooling phase C1a of the first drying cycle is initiated by activating the circulation means (not shown) for circulating the condensed water from the reservoir 800 to the second heat exchanger 210 and back. Thereby, the temperature of the air passing the second heat exchanger 210 will first be brought down to approx. 7 °C and thereafter gradually increase as the temperature of the circulating condense water increases. When the condense water temperature reaches approx. 15 °C, a subsequent cooling phase C1b is initiated by inactivating the circulation means, activating the compressor 316 and setting the three-way valves 320a, 320b such that heat is transferred from the evaporator 206 to the condense water in the reservoir 800. Throughout the subsequent cooling phase C1b, the evaporator 206 brings the air passing therethrough to approx. 3 °C and the downstream passage through the cold side 204b of the first heat exchanger 204 increases the air temperature to approx. 15 ° C. Since the second heat exchanger 210 and the condenser 208 are inactive during the subsequent cooling phase cib, the temperature of the air passing through the air outlet 118 is approx. 15 ° C. During the subsequent cooling phase C1b, the heat transfer from the evaporator 206 to the reservoir 800 increases the temperature of the condense water in the reservoir 800. The subsequent cooling phase C1b is continued until the temperature of the condense water in the reservoir 800 reaches approx. 45 °C. This storage of heat is utilized during the following second heating phase H2 of the second drying cycle.

For this reason, the second heating phase H2 of the second drying cycle is divided into an initial heating phase H2a and a subsequent heating phase H2b. During the initial heating phase H2a, the circulation means (not shown) for circulating the condense water between the reservoir 800 and the second heat exchanger 210 is activated, the compressor 316 is activated and the three-way valves 320a, 320b are set to transfer heat from the evaporator 206 to the condenser 208.. Thus, during the initial heating phase H2a of the second drying cycle, both the heat pump with condenser 208 and the heated condense water (via the second heat exchanger 210) are used for increasing the air passing the air-drying system. By this means, the air passing the outlet 118 is initially increased to approx. 58°C. However, as the temperature of the condense water decreases, the contributory heating effect of the second heat exchanger 210 also decreases. When the temperature of the condense water has reached approx. 20 ° C, the initial heating phase is terminated and the subsequent heating phase H2b is initiated by inactivating the circulation means (not shown) such that the flow of condense water through the second heat exchanger 210 is stopped. At this point, the previously collected condense water is emptied from the reservoir 800 such that the reservoir 800 may again be used for collecting condense water extracted from the air passing through the air-drying system.

At the end of the initial heating phase H2a of the second drying cycle, the air passing through the outlet 118 has a temperature of approx. 50°C. During the subsequent heating phase H2b, the heat pump is continuously operated for transferring heat from the evaporator 206 to the condenser 208 and the air passing through the outlet 118 is maintained at approx. 50 ° C. At the shown example, the subsequent heating phase H2b is continued for approx. 28 minutes. During this subsequent heating phase H2b, condense water is again extracted at the first warm side 204a of the first heat exchanger 204 and the evaporator 206 and the water is collected in the now emptied reservoir 800.

Thereafter, the second cooling phase C2 comprising an initial cooling phase C2a and a subsequent cool phase C2b is carried through essentially in the same manner as the first cooling phase C1. This second cooling phase C2 is followed by a third drying cycle comprising a third heating phase H3 and a third cooling phase. As indicated by the diagram, all following drying cycles from the second are carried out in essentially the same manner as the second drying cycle comprising heating phase H2 and cooling phase C2. At the shown example, a total of six drying cycles are used for bringing the moisture content of the load to approx. 14%. Since each drying cycle is approx. 60 minutes the entire drying process lasts for about 6 hours. As also indicated in the diagram, the above described way of operating the air-drying device will result in that the temperature T2 at the load in the drying chamber, after an initial temperature increase will vary cyclically between approx. 32 and 48° C. In order to bring the load back to room temperature after reaching the desired moisture content, the last subsequent drying phase may be prolonged,

According to further embodiments of the method and the air-drying system, the operation of the heat pump comprising the evaporator 206, the condenser 208 and the compressor 316 is regulated in response to the presently available operation power. By this means a varying power generating source such as a wind turbine or a solar panel may be used for providing operation power to the air-drying system, without risking that the power consumption of the air-drying system exceeds the momentarily available power provided by the varying power generating source.

For asserting optimal operation of the air-drying system at such embodiments, the operation of the air flow device 202 should be regulated for controlling the air flow rate in response to the temperature of the air downstream of the evaporator 206 and upstream of the first cold side 204b of the first heat exchanger 204.

In other words, the operation of the heat pump is controlled such that it does not use more power than what is determined by the available power. The available power may for example depend on what an external power harvesting source is able to produce at a given time. Thus, the available power may vary over time. At such embodiments, it is possible to use renewable power sources for powering the air-drying system. Thus, several advantages, such as reduced cost, and more environmentally friendly operation is achieved since the often-used oil or pellets in prior art systems are avoided. Further, the quality of the dried product may be improved due to the conditions (lower humidity) provided in the drying chamber.

The available power to the heat pump affects its operating power, e.g. its cooling power and therefore the temperature of the cooled and dehumidified air downstream of the evaporator. For the air-drying system to operate efficiently, it is of interest to ensure that the temperature of the cooled dehumidified air downstream of the evaporator 206 is controlled appropriately. This may be achieved by adapting the air flow device to be responsive to control the flow rate of inlet air based at least partly on a temperature of the cooled and dehumidified air downstream of the evaporator. Accordingly, the operation of the air flow device will indirectly be adapted based on the available power for the heat pump, which overall provides an efficient air-drying system.

For example, if the available power to the compressor 316 of the heat pump is low, the air flow device 202 may have to decrease the air flow rate in order for evaporator 206 to be able to cool the air sufficiently. The air flow device 202 may be configured to control the air flow from the inlet 116 to the outlet 118 such that the temperature of the cooled and dehumidified air downstream of the evaporator 206 is maintained at a predetermined temperature. In other words, a predetermined temperature is set, and the compressor operates according to the presently available power. Depending on the air flow rate, the ability for the evaporator to cool the air is altered, i.e. if the air flow rate is too high, the air evaporator 206 is not able to cool the air sufficiently during the passage through the evaporator. Correspondingly, if the air flow rate is too low the air evaporator 206 cools the air too much. Therefore, the air flow device 202 alters the air flow rate so that the predetermined temperature is maintained. The predetermined temperature may be selected so that the evaporator can operate in an efficient operating point. Typically, the predetermined temperature is set at 0°C or just above for achieving maximum condensation of moisture in the air while still avoiding the formation of ice or frost in the evaporator 206. Maintaining the predetermined temperature thereby improves the efficiency of the drying system.

Hence, the air flow device 202 may be responsive to increase the air flow rate when the temperature of the cooled and dehumidified air downstream of the evaporator 206 is below a first predetermined threshold temperature.

Correspondingly, the air flow device 202 may be responsive to decrease the air flow rate when the temperature of the cooled and dehumidified air downstream of the evaporator is above a second predetermined threshold temperature.

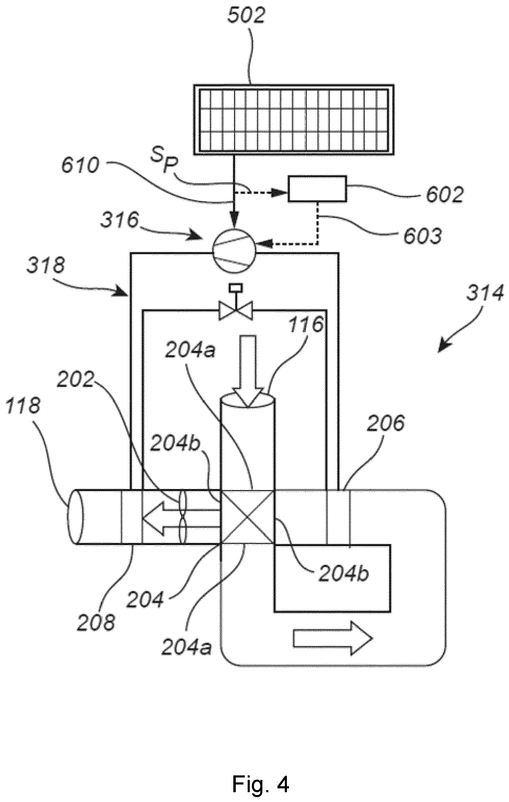

Figs. 4-6 illustrates schematically how the heat pump and the air flow device may be controlled at such embodiments. In figs. 4-6 the second heat exchanger and the has been condensed water reservoir have been omitted for increase clarity.

Fig. 4 schematically illustrates an air-drying system 314 connected to a power generating source 502 adapted to provided operation power to the heat pump 318, more specifically to the compressor 316. A power output of the power generating source 502 is connected to the compressor 316 by means of a power cable 610. A signal Sp indicative to the momentarily available power from the power generating source 502 is generated at the power cable 610 or at the power generating source 502 and is feed to a control unit 602. The control unit sends a first control signal to the compressor 316 for controlling the operational speed of the compressor 316 such that the power required by the compressor 316 does not exceed the momentarily available power provided by the power generating source 502. The control unit 602 may further be configured to receive a value of the temperature of the cooled and dehumidified air downstream of the evaporator 206 and to control the flow rate generated by the air flow device 202.

Thus, the presently available amount of operation power is the power presently available from the power generating source 502 connected to the air-drying system 314. The power generating source may be a solar power generation source 502, such as a solar panel including photovoltaic module configured convert received solar power to electric power. In this way, the power generated by an environmentally friendly power source such as solar photovoltaic module may be efficiently used for drying a product in a drying chamber.

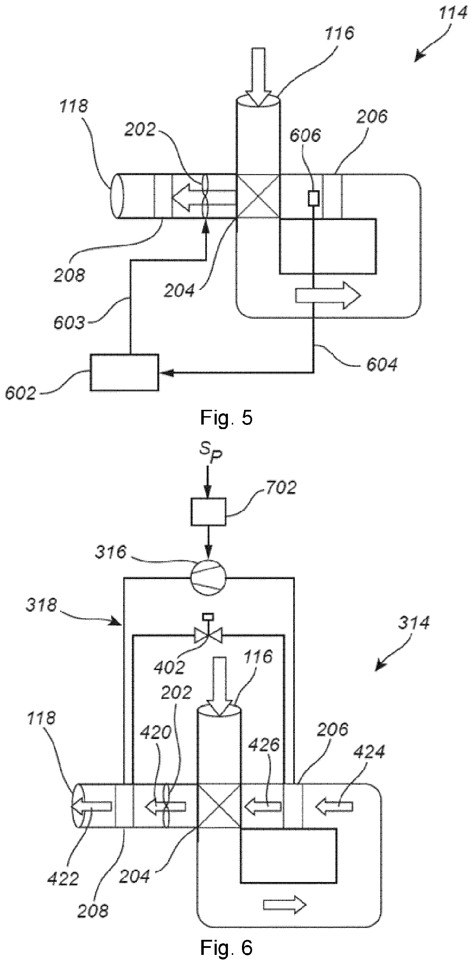

Fig. 5 illustrates a control unit 602 configured to control the operation of an air flow device 202 for controlling the air flow rate through the drying system 114. The control unit 602 is configured to control the air flow device 202 to provide an air flow rate based on the temperature of the cooled dehumidified air downstream of the evaporator 206. Thus, the control unit 602 transmits a control signal 603, via e.g. wireless means or hardwired means, to the air flow device 202 to alter the operation of the air flow device 202. The air flow device may be provided as a fan whereby the control signal 603 may alter the operation speed of a motor controlling the speed of the fan. The control unit 602 may receive a temperature signal 604 from a thermometer 606 arranged directly downstream of the evaporator 206. The temperature signal 604 indicates the temperature of the air immediately downstream of the evaporator 206.

Fig. 6 illustrates a control unit 702 configured to control the operation of a heat pump 318 in which heat is transferred from the evaporator 206 to the condenser 208 by a compressor 316, the heat pump 318 being included in a drying system 314. The control unit 702 is configured to control the compressor in response to a signal Sp indicative of a presently available amount of operation power.

With reference to figs. 5 and 6, the control unit 602 and the control unit 702 may be provided as a single control unit configured to control both the compressor 316 in response to the signal Sp indicative of a presently available amount of operation power, and configured to control the air flow device 202 to provide an air flow rate based on the temperature of the cooled dehumidified air downstream of the air cooler and dehumidifier 206.

At still further embodiments, the air-drying system may comprise a hybrid photovoltaic thermal solar collector ("PVT") for providing electrical power to the heat pump and for additional heating of the air during the heating phases of the drying cycles.

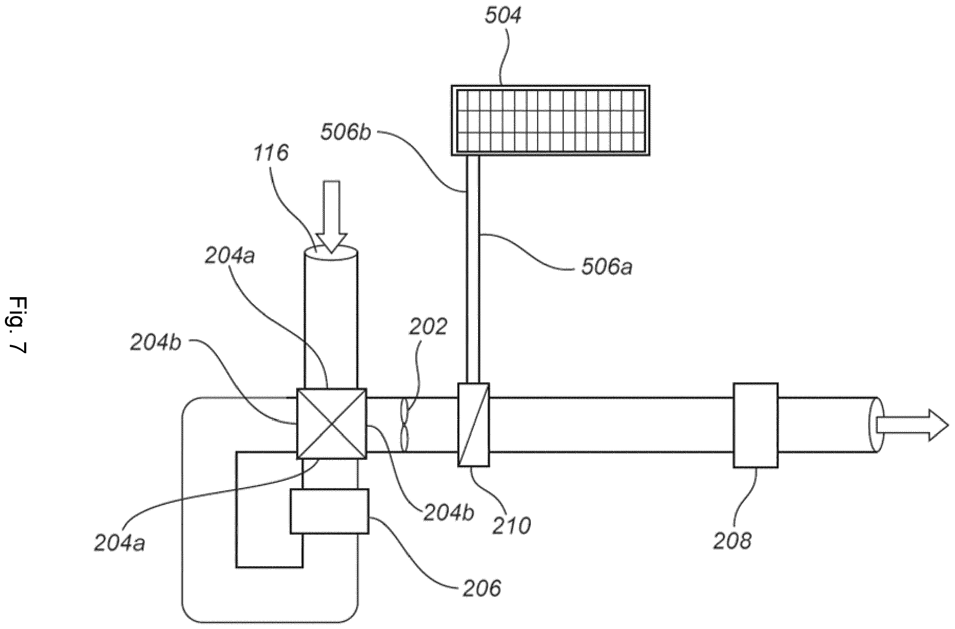

Fig. 7 illustrates such and embodiment of the air-drying system. In fig. 7 the condensed water reservoir has been omitted. As in the previous examples, the air-drying system comprises an air inlet 116 for fresh air, a first heat exchanger 204, an evaporator 206, a second heat exchanger 210 a condenser 208 and an air flow device.

A hybrid photovoltaic thermal solar collector ("PVT") 504 is connected to the air-drying system. The photovoltaic part of the panel 504 is electrically connected to the compressor (not shown in fig. 7) for supplying operation power to the heat pump as described above with reference to fig. 4. In addition, the hybrid PVT panel also comprises a thermal part which is arranged to exchange heat with the photovoltaic part thereby to cool the photovoltaic part in order to increase the efficiency thereof. The thermal part comprises a conduit which carries a cooling liquid medium and a solar panel heat exchanger which transfers heat from the photovoltaic part to the cooling medium. The thermal part of the panel 504 is connected to the second heat exchanger 210 by conduits 506a, 506b which carry the cooling medium from the solar panel heat exchanger to the second heat exchanger 210 and back. The cooling medium is thus circulated between the solar panel 504 and the second heat exchanger 210. The cooling medium is heated at the solar panel 504 and the heated cooling medium may be conducted to the second heat exchanger 210, where heat is transferred from the cooling medium to the air passing the second heat exchanger 210. By this means the air passing the second heat exchanger may be additionally heated at the same time as the cooling medium is cooled.

As readily understood, the thermal part is used for additional heating of the air flowing through the air-drying system only during the heating phases of the altering drying cycles. Typically, when passing the second heat exchanger 210, the temperature of the air is raised from approx. 14° to approx. 25° C. The cooled cooling medium is returned to the solar panel for continued cooling of the photovoltaic part of the solar panel 504.

By this means, the heat harvested from the thermal part of the PVT panel 504 may be used during the heating phases for further pre-heating the air in the drying system, before it reaches the condenser 210. This in turn results in that the overall power consumption of the drying system is reduced. At the same time, the cooling of the photovoltaic part of the solar panel 504 results in an increased efficiency of solar to electric power transformation in the photovoltaic part such that the operation power available to the thermal circuit of the drying system is increased.

At the embodiment illustrated in fig. 7 the thermal part of the PVT panel is connected via conduits 506a, 506b to the same heat exchanger 210 as to which the heat transfer medium for cooling the air during the cooling phases is connected. The conduits 506a, 506b are then connected to that side of the heat exchanger which, during the cooling phases, constitutes the cold side of the heat exchanger. As readily understood this side of the heat exchanger forms the warm side of the heat exchanger when it, during the heating phases is used for additional heating of the air passing said heat exchanger 210.

As readily understood by the skilled person, the air-drying system may also comprise a control system for operating the air-drying system in an efficient manner in dependence of the prevailing conditions. Such a control system may for example be used for regulating the frequency and the amplitude of the varying temperature of the air supplied to the drying chamber. It may also be noted that the frequency and amplitude may be varied between different cycles in the same drying sequence. The control system may comprise means for detecting or inputting the type and amount of the load to be dried and means for inputting and/or storing parameters of the type of load which parameters are important for achieving an optimal drying process. Additionally, the control system may comprise means for detecting the temperature and relative humidity of the supplied air as well as of the air at different positions in the air-drying system and in the drying chamber. As described above, the control system may further comprise means for detecting the momentarily available operation power and for controlling the operation of the air flow device in response to the air temperature immediately downstream if the evaporator. For efficient control of the drying process, the control system may also comprise means for automatic control of the operation of the heat pump with the compressor, the three-way valves, the circulation means for circulating the heat transfer media between the reservoir and the second heat exchanger and, where applicable, the circulation of the cooling media between the thermal part of a PVT and the second heat exchanger. At embodiments where the air-drying system comprises air inlets and/or outlets with dampers, the control system may also comprise means for deciding an optimal mix of re-circulated and/or fresh ambient air to be supplied to the air-drying system as well as means for regulating the dampers in order to achieve such an optimal mix.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

For instance, at some applications, the condensed water reservoir may be omitted. However, at such applications there should be provided other means for absorption and transfer of heat from the second heat exchanger. The second heat exchanger may at such embodiments be formed as an evaporator of a second heat pump further comprising a second condenser. The second condenser may then be arranged at some heat requiring space, object or the like for providing heat absorbed from the air-drying system to this space, object or the like. Alternatively, the second heat exchanger may be connected to a further heat exchanger without any compressor or expansion valve, such that the heat transfer circuit comprising the second and the further heat exchanger do not form a heat pump. Also at such embodiments, heat absorbed by the second heat exchanger during the cooling phases may be used for any usable purpose at the further heat exchanger.

## Claims

1. A method of drying a material in a drying chamber (100), the method comprising the steps of;
- supplying air to an air-drying system (114, 214, 314) which air-drying system comprises;
· an air inlet (116),
· a first heat exchanger (204) having a first warm side (204a) and a first cold side (204b),
· a heat pump (318) comprising an evaporator (206), a condenser (208) and a compressor (316) arranged to provide a first heat transfer from the evaporator (206) to the condenser (208),
· an air outlet (118) arranged to supply the air to the drying chamber (100),
· a second heat exchanger (210) having a second warm side (210a) and a second cold side (210b), the second cold side (210b) being connected a heat transfer medium capable of absorbing heat from the second warm side (210a) through a second heat transfer, the second heat exchanger (210) being arranged downstream of the first cold side (204b) and upstream of the air outlet (118), and
· an air flow device (202) arranged to control the air flow rate from the air inlet (116) to the air outlet (118) for supplying air into a drying chamber (100),
- passing the air, by means of the air flow device (202), from the air inlet (116), sequentially through the first warm side (204a) of the first heat exchanger (204), the evaporator (206), the first cold side (204b) of the first heat exchanger (204), the condenser (208) and the air outlet (118) and further passing the air through the second warm side (210a) of the second heat exchanger (210), and
- alternately heating and cooling the air passing the air-drying system (114, 214, 314), wherein
· heating the air comprises promoting the first heat transfer while suppressing the second heat transfer, and
· cooling the air comprises suppressing the first heat transfer while promoting the second heat transfer, and wherein
- the first heat transfer is promoted by increasing the operational speed of the compressor (316) and suppressed by decreasing the operational speed of the compressor (316) and
- the heat transfer medium is arranged to flow through the second cold side (210b) of the second heat exchanger (210) and the second heat transfer is promoted by increasing and suppressed by decreasing the flow of heat transfer medium through said second cold side (210b) of the second heat exchanger (210).

2. The method according to claim 1, further comprising condensing water from the air passing the evaporator (206) and collecting the condensate water in a reservoir (800).

3. The method according to claim 2, wherein the second heat transfer comprises transferring heat from the air passing the second cold side (210b) of the second heat exchanger (210) to the condensed water in the reservoir (210).

4. The method according to claim 3, wherein the second heat transfer comprises transferring heat from the air passing the second cold side (210b) of the second heat exchanger (210) to the condensed water in the reservoir by means of the heat transfer medium and a first reservoir heat exchanger (804) arranged in the reservoir (800).

5. The method according to claim 3, wherein the second heat transfer comprises using the condensate water as the heat transfer media by passing the condensate water from the reservoir (800) through the second cold side (210) of the second heat exchanger (210).

6. The method according to any of claims 1-5, wherein the heat pump (318) is arranged to provide a third heat transfer from the evaporator (206) to the condensate water in the reservoir (800) and wherein cooling the air comprises promoting the third heat transfer.

7. The method according to any of claims 1-6, further comprising regulating the operation of the compressor (316) in response to the presently available operation power and regulating the air flow device (202) for controlling the air flow rate in response to the temperature of the air downstream of the evaporator (206) and upstream of the first cold side (204b) of the first heat exchanger (204).

8. The method according to any of claims 1 - 7, further comprising supplying operational power to the compressor (316) and the air flow device (202) from a varying power generating source (502, 504), such as a hybrid photovoltaic thermal solar collector ("PVT").

9. The method according to any of claims 1-8, wherein the heating and cooling of the air in the air-drying system is alternated with a frequency of 5 to 100 cycles per 24 hours, preferably 15 to 30 cycles per 24 hours.

10. An air-drying system (114, 214,314) for carrying out the method of any of claims 1-11 in a drying chamber, the air-drying system comprising;
· an air inlet (116),
· a first heat exchanger (204) having a first warm side (204a) and a first cold side (204b),
· a heat pump (318) comprising an evaporator (206), a condenser (208) and a compressor (316) arranged to provide a first heat transfer from the evaporator (206) to the condenser (208),
· an air outlet arranged to supply the air to the drying chamber,
· a duct (201) arranged to conduct air from the air inlet (116) sequentially through the first warm side (204a), the evaporator (206), the first cold side (204b) and the condenser (208) to the air outlet (118),
· a second heat exchanger (210) having a second warm side (210a) and a second cold side (210b), the second cold side (210b) being connected a heat transfer medium capable of absorbing heat from the second warm side (210a) through a second heat transfer, the second heat exchanger (210) being arranged downstream of the first cold side (204b) and upstream of the air outlet (118),
· an air flow device (202) arranged to control the air flow rate from the air inlet (116) to the air outlet (118), and
· means for alternately promoting the first heat transfer while suppressing the second heat transfer and suppressing the first heat transfer while promoting the second air transfer, wherein
· the means for promoting and suppressing the first heat transfer comprises means for increasing and decreasing the operational sped of the compressor (316), wherein
· the heat transfer medium is arranged to flow through the second cold side (210b) of the second heat exchanger (210) and wherein the means for promoting and suppressing the second heat transfer comprises means for increasing and decreasing the flow of heat transfer medium through said second cold side (210b) of the second heat exchanger (210).

11. The air-drying system according to claim 10, further comprising a reservoir (800) arranged to collect water which has condensed from the air passing the evaporator (206).

12. The air-drying system according to claim 11, comprising a first reservoir heat exchanger (804) arranged to transfer heat from the heat transfer medium to condensed water in the reservoir (800).

13. The air-drying system according to claim 11, further comprising conduits (804a', 804b') for conducting condensed water from the reservoir (800) to the second cold side (210b) of the second heat exchanger (210) and back.

14. The air-drying system according to any of claims 11-12, wherein the heat pump (316) comprises means for alternatively providing a first heat transfer from the evaporator (206) to the condenser (208) and a third heat transfer from the evaporator (206) to the condensed water in the reservoir (800).

15. The air-drying system according to any of claims 10 - 14, comprising means for regulating the operation of the compressor (316) in response to the presently available operation power and means for regulating the air flow device (202) for controlling the air flow rate in response to the temperature of the air downstream of the evaporator (206) and upstream of the first cold side (204b) of the first heat exchanger (204).

16. The air-drying system according to any of claims 10 - 15, comprising a varying power generating source (502, 504, such as a hybrid photovoltaic thermal solar collector ("PVT") arranged to provide operational power to the compressor (316) and the air flow device (202).

## Patentansprüche

1. Verfahren zur Trocknung eines Materials in einer Trocknungskammer (100), wobei das Verfahren folgende Schritte umfasst:
- Zuführen von Luft zu einem Lufttrocknungssystem (114, 214, 314), wobei das Lufttrocknungssystem Folgendes umfasst:
· einen Lufteinlass (116),
· einen ersten Wärmetauscher (204), der eine erste warme Seite (204a) und eine erste kalte Seite (204b) aufweist,
· eine Wärmepumpe (318), die einen Verdampfer (206), einen Kondensator (208) und einen Verdichter (316), der zum Bereitstellen einer ersten Wärmeübertragung vom Verdampfer (206) zum Kondensator (208) geeignet ist, umfasst,
· einen Luftauslass (118), der zum Zuführen der Luft zur Trocknungskammer (100) geeignet ist,
· einen zweiten Wärmetauscher (210), der eine zweite warme Seite (210a) und eine zweite kalte Seite (210b) aufweist, wobei die zweite kalte Seite (210b) mit einem Wärmeübertragungsmedium verbunden ist, welches zum Aufnehmen von Wärme von der zweiten warmen Seite (210a) durch eine zweite Wärmeübertragung geeignet ist, wobei der zweite Wärmetauscher (210) stromabwärts von der ersten kalten Seite (204b) und stromaufwärts vom Luftauslass (118) angeordnet ist, und
· eine Luftströmungsvorrichtung (202) die zum Steuern des Luftdurchsatzes vom Lufteinlass (116) zum Luftauslass (118) zum Zuführen von Luft in eine Trocknungskammer (100) geeignet ist,
- Weiterleiten der Luft, mittels der Luftströmungsvorrichtung (202), vom Lufteinlass (116) nacheinander durch die erste warme Seite (204a) des ersten Wärmetauschers (204), den Verdampfer (206), die erste kalte Seite (204b) des ersten Wärmetauschers (204), den Kondensator (208) und den Luftauslass (118) und ferner Weiterleiten der Luft durch die zweite warme Seite (210a) des zweiten Wärmetauschers (210), und
- abwechselndes Erwärmen und Kühlen der Luft, die das Lufttrocknungssystem (114, 214, 314) passiert, wobei
· das Erwärmen der Luft das Fördern der ersten Wärmeübertragung umfasst, während die zweite Wärmeübertragung unterdrückt wird, und
· das Kühlen der Luft das Unterdrücken der ersten Wärmeübertragung umfasst, während die zweite Wärmeübertragung gefördert wird, und wobei
- die erste Wärmeübertragung durch ein Erhöhen der Betriebsgeschwindigkeit des Verdichters (316) gefördert wird und durch ein Verringern der Betriebsgeschwindigkeit des Verdichters (316) unterdrückt wird, und
- das Wärmeübertragungsmedium zum Strömen durch die zweite kalte Seite (210b) des zweiten Wärmetauschers (210) geeignet ist und die zweite Wärmeübertragung durch ein Erhöhen des Strömens des Wärmeübertragungsmediums durch die zweite kalte Seite (210b) des zweiten Wärmetauschers (210) gefördert wird und durch ein Verringern desselben unterdrückt wird.

2. Verfahren nach Anspruch 1, welches ferner das Kondensieren von Wasser aus der Luft, die den Verdampfer (206) passiert, und das Sammeln des Kondenswassers in einem Behälter (800) umfasst.

3. Verfahren nach Anspruch 2, wobei die zweite Wärmeübertragung das Übertragen von Wärme von der Luft, welche die zweite kalte Seite (210b) des zweiten Wärmetauschers (210) passiert, auf das kondensierte Wasser im Behälter (210) umfasst.

4. Verfahren nach Anspruch 3, wobei die zweite Wärmeübertragung das Übertragen von Wärme von der Luft, welche die zweite kalte Seite (210b) des zweiten Wärmetauschers (210) passiert, auf das kondensierte Wasser im Behälter mithilfe des Wärmeübertragungsmediums und eines ersten Behälterwärmetauschers (804), der im Behälter (800) angeordnet ist, umfasst.

5. Verfahren nach Anspruch 3, wobei die zweite Wärmeübertragung das Verwenden des Kondenswassers als Wärmeübertragungsmedium durch das Weiterleiten des Kondenswassers aus dem Behälter (800) durch die zweite kalte Seite (210) des zweiten Wärmetauschers (210) umfasst.

6. Verfahren nach einem der Ansprüche 1 - 5, wobei die Wärmepumpe (318) zum Bereitstellen einer dritten Wärmeübertragung vom Verdampfer (206) auf das Kondenswasser im Behälter (800) geeignet ist und wobei das Kühlen der Luft das Fördern der dritten Wärmeübertragung umfasst.

7. Verfahren nach einem der Ansprüche 1 - 6, welches ferner das Regulieren des Betriebs des Verdichters (316) als Reaktion auf die gegenwärtig verfügbare Betriebsleistung und das Regulieren der Luftströmungsvorrichtung (202) zum Steuern des Luftdurchsatzes als Reaktion auf die Temperatur der Luft stromabwärts vom Verdampfer (206) und stromaufwärts von der ersten kalten Seite (204b) des ersten Wärmetauschers (204) umfasst.

8. Verfahren nach einem der Ansprüche 1 - 7, welches ferner das Zuführen einer Betriebsleistung zum Verdichter (316) und zur Luftströmungsvorrichtung (202) von einer variierenden Stromerzeugungsquelle (502, 504), wie z. B. einem hybriden photovoltaischen-thermischen ("PVT") Solarkollektor, umfasst.

9. Verfahren nach einem der Ansprüche 1 - 8, wobei das Erwärmen und Kühlen der Luft in dem Lufttrocknungssystem mit einer Frequenz von 5 bis 100 Zyklen pro 24 Stunden, vorzugsweise 15 bis 30 Zyklen pro 24 Stunden, abgewechselt wird.

10. Lufttrocknungssystem (114, 214, 314) zur Ausführung des Verfahrens nach einem der Ansprüche 1 - 11 in einer Trocknungskammer, wobei das Lufttrocknungssystem Folgendes umfasst:
· einen Lufteinlass (116),
· einen ersten Wärmetauscher (204), der eine erste warme Seite (204a) und eine erste kalte Seite (204b) aufweist,
· eine Wärmepumpe (318), die einen Verdampfer (206), einer Kondensator (208) und einen Verdichter (316), der zum Bereitstellen einer ersten Wärmeübertragung vom Verdampfer (206) zum Kondensator (208) geeignet ist, umfasst,
· einen Luftauslass, der zum Zuführen der Luft zu der Trocknungskammer geeignet ist,
· einen Kanal (201), der zum Leiten von Luft vom Lufteinlass (116) nacheinander durch die erste warme Seite (204a), den Verdampfer (206), die erste kalte Seite (204b) und den Kondensator (208) zum Luftauslass (118) geeignet ist,
· einen zweiten Wärmetauscher (210), der eine zweite warme Seite (210a) und eine zweite kalte Seite (210b) aufweist, wobei die zweite kalte Seite (210b) mit einem Wärmeübertragungsmedium verbunden ist, welches zum Aufnehmen von Wärme von der zweiten warmen Seite (210a) durch eine zweite Wärmeübertragung geeignet ist, wobei der zweite Wärmetauscher (210) stromabwärts von der ersten kalten Seite (204b) und stromaufwärts vom Luftauslass (118) angeordnet ist,
· eine Luftströmungsvorrichtung (202), die zum Steuern des Luftdurchsatzes vom Lufteinlass (116) zum Luftauslass (118) geeignet ist, und
· Mittel zum abwechselnden Fördern der ersten Wärmeübertragung, während die zweite Wärmeübertragung unterdrückt wird, und Unterdrücken der ersten Wärmeübertragung, während die zweite Wärmeübertragung gefördert wird, wobei
· das Mittel zum Fördern und Unterdrücken der ersten Wärmeübertragung Mittel zum Erhöhen und Verringern der Betriebsgeschwindigkeit des Verdichters (316) umfasst, wobei
· das Wärmeübertragungsmedium zum Strömen durch die zweite kalte Seite (210b) des zweiten Wärmetauschers (210) geeignet ist und wobei das Mittel zum Fördern und Unterdrücken der zweiten Wärmeübertragung Mittel zum Erhöhen und Verringern des Strömens des Wärmeübertragungsmediums durch die zweite kalte Seite (210b) des zweiten Wärmetauschers (210) umfasst.

11. Lufttrocknungssystem nach Anspruch 10, welches ferner einen Behälter (800) umfasst, der zum Sammeln von Wasser geeignet ist, welches aus der Luft, die den Verdampfer (206) passiert, kondensiert ist.

12. Lufttrocknungssystem nach Anspruch 11, welches einen ersten Behälterwärmetauscher (804) umfasst, der zum Übertragen von Wärme vom Wärmeübertragungsmedium auf kondensiertes Wasser im Behälter (800) geeignet ist.

13. Lufttrocknungssystem nach Anspruch 11, welches ferner Leitungen (804a', 804b') zum Leiten von kondensiertem Wasser vom Behälter (800) zur zweiten kalten Seite (210b) des zweiten Wärmetauschers (210) und zurück umfasst.

14. Lufttrocknungssystem nach einem der Ansprüche 11 - 12, wobei die Wärmepumpe (316) Mittel zum abwechselnden Bereitstellen einer ersten Wärmeübertragung vom Verdampfer (206) zum Kondensator (208) und einer dritten Wärmeübertragung vom Verdampfer (206) zu dem kondensierten Wasser im Behälter (800) umfasst.

15. Lufttrocknungssystem nach einem der Ansprüche 10 - 14, welches Mittel zum Regulieren des Betriebs des Verdichters (316) als Reaktion auf die gegenwärtig verfügbare Betriebsleistung und Mittel zum Regulieren der Luftströmungsvorrichtung (202) zum Steuern des Luftdurchsatzes als Reaktion auf die Temperatur der Luft stromabwärts vom Verdampfer (206) und stromaufwärts von der ersten kalten Seite (204b) des ersten Wärmetauschers (204) umfasst.

16. Lufttrocknungssystem nach einem der Ansprüche 10 - 15, welches eine variierende Stromerzeugungsquelle (502, 504), wie z. B. einem hybriden photovoltaischen-thermischen ("PVT") Solarkollektor, umfasst, die zum Bereitstellen einer Betriebsleistung an den Verdichter (316) und die Luftströmungsvorrichtung (202) geeignet ist.

## Revendications

1. Procédé de séchage d'un matériau dans une chambre de séchage (100) , le procédé comprenant les étapes suivantes consistant à :
- fournir de l'air à un système de séchage à l'air (114, 214, 314), lequel système de séchage à l'air comprend :
- une entrée d'air (116),
- un premier échangeur thermique (204) ayant un premier côté chaud (204a) et un premier côté froid (204b) ,
- une pompe à chaleur (318) comprenant un évaporateur (206), un condenseur (208) et un compresseur (316) agencé pour assurer un premier transfert de chaleur de l'évaporateur (206) vers le condenseur (208),
- une sortie d'air (118) agencée pour fournir l'air à la chambre de séchage (100),
- un deuxième échangeur thermique (210) ayant un deuxième côté chaud (210a) et un deuxième côté froid (210b), le deuxième côté froid (210b) étant raccordé à un milieu de transfert de chaleur capable d'absorber la chaleur du deuxième côté chaud (210a) via un deuxième transfert de chaleur, le deuxième échangeur thermique (210) étant agencé en aval du premier côté froid (204b) et en amont de la sortie d'air (118), et
- un dispositif de circulation d'air (202) agencé pour réguler le débit d'air depuis l'entrée d'air (116) jusqu'à la sortie d'air (118) pour fournir de l'air dans une chambre de séchage (100),
- faire passer l'air, au moyen du dispositif de circulation d'air (202), depuis l'entrée d'air (116), séquentiellement à travers le premier côté chaud (204a) du premier échangeur thermique (204), l'évaporateur (206), le premier côté froid (204b) du premier échangeur thermique (204), le condenseur (208) et la sortie d'air (118) et en faisant passer l'air à travers le deuxième côté chaud (210a) du deuxième échangeur thermique (210), et
- chauffer et refroidir alternativement l'air traversant le système de séchage à l'air (114, 214, 314), dans lequel
- le chauffage de l'air comprend de favoriser le premier transfert de chaleur tout en supprimant le deuxième transfert de chaleur, et
- le refroidissement de l'air comprend de supprimer le premier transfert de chaleur tout en favorisant le deuxième transfert de chaleur et dans lequel
- le premier transfert de chaleur est favorisé en augmentant la vitesse de fonctionnement du compresseur (316) et supprimé en diminuant la vitesse de fonctionnement du compresseur (316) et
- le milieu de transfert de chaleur est agencé pour s'écouler à travers le deuxième côté froid (210b) du deuxième échangeur thermique (210) et le deuxième transfert de chaleur est favorisé en augmentant et supprimé en diminuant le flux de milieu de transfert de chaleur à travers ledit deuxième côté froid (210b) du deuxième échangeur thermique (210).

2. Procédé selon la revendication 1, comprenant en outre la condensation de l'eau de l'air passant par l'évaporateur (206) et la collecte de l'eau de condensat dans un réservoir (800).

3. Procédé selon la revendication 2, dans lequel le deuxième transfert de chaleur comprend le transfert de chaleur de l'air passant par le deuxième côté froid (210b) du deuxième échangeur thermique (210) vers l'eau condensée dans le réservoir (210).

4. Procédé selon la revendication 3, dans lequel le deuxième transfert de chaleur comprend le transfert de chaleur de l'air passant par le deuxième côté froid (210b) du deuxième échangeur thermique (210) vers l'eau condensée dans le réservoir au moyen du milieu de transfert de chaleur et un premier échangeur thermique à réservoir (804) agencé dans le réservoir (800) .

5. Procédé selon la revendication 3, dans lequel le deuxième transfert de chaleur comprend l'utilisation de l'eau de condensat comme milieu de transfert de chaleur en faisant passer l'eau de condensat du réservoir (800) à travers le deuxième côté froid (210) du deuxième échangeur thermique (210).

6. Procédé selon une quelconque des revendications 1 à 5, dans lequel la pompe à chaleur (318) est agencée pour fournir un troisième transfert de chaleur de l'évaporateur (206) à l'eau de condensat dans le réservoir (800) et dans lequel le refroidissement de l'air comprend de favoriser le troisième transfert de chaleur.

7. Procédé selon une quelconque des revendications 1 à 6, comprenant en outre la régulation du fonctionnement du compresseur (316) en réponse à la puissance de fonctionnement actuellement disponible et la régulation du dispositif de circulation d'air (202) pour réguler le débit d'air en réponse à la température de l'air en aval de l'évaporateur (206) et en amont du premier côté froid (204b) du premier échangeur thermique (204).

8. Procédé selon une quelconque des revendications 1 à 7, comprenant en outre la fourniture d'une puissance opérationnelle au compresseur (316) et au dispositif de circulation d'air (202) à partir d'une source de génération d'énergie variable (502, 504), telle qu'un capteur solaire thermique photovoltaïque hybride (« PVT »).

9. Procédé selon une quelconque des revendications 1 à 8, dans lequel le chauffage et le refroidissement de l'air dans le système de séchage à l'air sont alternés avec une fréquence de 5 à 100 cycles par 24 heures, de préférence de 15 à 30 cycles par 24 heures.

10. Système de séchage à l'air (114, 214, 314) pour mettre en œuvre le procédé d'une quelconque des revendications 1 à 11 dans une chambre de séchage, le système de séchage à l'air comprenant :
- une entrée d'air (116),
- un premier échangeur thermique (204) ayant un premier côté chaud (204a) et un premier côté froid (204b) ,
- une pompe à chaleur (318) comprenant un évaporateur (206), un condenseur (208) et un compresseur (316) agencé pour fournir un premier transfert de chaleur de l'évaporateur (206) au condenseur (208),
- une sortie d'air agencée pour amener l'air à la chambre de séchage,
- un conduit (201) agencé pour conduire l'air depuis l'entrée d'air (116) séquentiellement à travers le premier côté chaud (204a), l'évaporateur (206), le premier côté froid (204b) et le condenseur (208) jusqu'à la sortie d'air (118),
- un deuxième échangeur thermique (210) ayant un deuxième côté chaud (210a) et un deuxième côté froid (210b), le deuxième côté froid (210b) étant raccordé à un milieu de transfert de chaleur capable d'absorber la chaleur du deuxième côté chaud (210a) à travers un deuxième transfert de chaleur, le deuxième échangeur thermique (210) étant agencé en aval du premier côté froid (204b) et en amont de la sortie d'air (118),
- un dispositif de circulation d'air (202) agencé pour réguler le débit d'air depuis l'entrée d'air (116) jusqu'à la sortie d'air (118), et
- des moyens pour alternativement favoriser le premier transfert de chaleur tout en supprimant le deuxième transfert de chaleur et supprimer le premier transfert de chaleur tout en favorisant le deuxième transfert d'air, dans lequel
- les moyens pour favoriser et supprimer le premier transfert de chaleur comprennent des moyens pour augmenter et diminuer la vitesse de fonctionnement du compresseur (316), dans lequel
- le milieu de transfert de chaleur est agencé pour s'écouler à travers le deuxième côté froid (210b) du deuxième échangeur thermique (210) et dans lequel les moyens pour favoriser et supprimer le deuxième transfert de chaleur comprennent des moyens pour augmenter et diminuer le flux de milieu de transfert de chaleur à travers ledit deuxième côté froid (210b) du deuxième échangeur thermique (210).

11. Système de séchage à l'air selon la revendication 10, comprenant en outre un réservoir (800) agencé pour collecter l'eau qui s'est condensée à partir de l'air passant par l'évaporateur (206).

12. Système de séchage à l'air selon la revendication 11, comprenant un premier échangeur thermique à réservoir (804) agencé pour transférer la chaleur du milieu de transfert de chaleur à l'eau condensée dans le réservoir (800).

13. Système de séchage à l'air selon la revendication 11, comprenant en outre des conduits (804a', 804b') pour conduire l'eau condensée du réservoir (800) vers le deuxième côté froid (210b) du deuxième échangeur thermique (210) et retour.

14. Système de séchage à l'air selon une quelconque des revendications 11 et 12, dans lequel la pompe à chaleur (316) comprend des moyens pour fournir alternativement un premier transfert de chaleur de l'évaporateur (206) au condenseur (208) et un troisième transfert de chaleur de l'évaporateur (206) à l'eau condensée dans le réservoir (800).

15. Système de séchage à l'air selon une quelconque des revendications 10 à 14, comprenant des moyens pour réguler le fonctionnement du compresseur (316) en réponse à la puissance de fonctionnement actuellement disponible et des moyens pour réguler le dispositif de circulation d'air (202) pour réguler le débit d'air en réponse à la température de l'air en aval de l'évaporateur (206) et en amont du premier côté froid (204b) du premier échangeur thermique (204).

16. Système de séchage à l'air selon une quelconque des revendications 10 à 15, comprenant une source de génération d'énergie variable (502, 504), telle qu'un capteur solaire thermique photovoltaïque hybride (« PVT ») agencé pour fournir de l'énergie opérationnelle au compresseur (316) et au dispositif de circulation d'air (202).
